# EUROPÄISCHE PATENTANMELDUNG

(11) **EP 4 293 267 A1**
(43) Veröffentlichungstag der Anmeldung: **20.12.2023**
(21) Anmeldenummer: 23171130.0
(22) Anmeldetag: 02.05.2023
(51) Int. Cl.: F16L 37/086, F16L 37/098

(54) **ROHRSTECKVERBINDUNG**

(30) Priorität: 13.06.2022 DE 102022114846
(71) Anmelder: Witzenmann GmbH, 75175 Pforzheim (DE)
(72) Erfinder: Ehrenberger, David, 75203 Königsbach-Stein (DE); LEIPPI, Alexander, 75177 Pforzheim (DE)
(74) Vertreter: LBP Lemcke, Brommer & Partner Patentanwälte mbB

(57) **Zusammenfassung**

Vorgeschlagen wird eine Steckverbindung (1) mit einem Innenrohr (2) und mit einem Außenrohr (3), welches Außenrohr (3) mit einem seiner Enden auf ein Ende des Innenrohrs (2) aufgesteckt ist, welche Steckverbindung (1) sich dadurch auszeichnet, dass außen an dem Innenrohr (2) im Bereich seines genannten Endes ein Federelement (4) angeordnet ist; das Außenrohr (3) an seinem genannten Ende eine erste Aufweitung (3a) aufweist, im Bereich welcher ersten Aufweitung (3a) das Außenrohr (3) von dem Innenrohr (2) beabstandet ist (A) und das Federelement (4) übergreift; und das Außenrohr (3) im Bereich der ersten Aufweitung (3a) eine Eingriffstruktur (3b) aufweist, mit welcher Eingriffstruktur (3b) das Federelement (4) in Eingriff steht.

## Beschreibung

Die Erfindung betrifft eine Steckverbindung mit einem Innenrohr und mit einem Außenrohr, welches Außenrohr mit einem seiner Enden auf ein Ende des Innenrohrs aufgesteckt ist, gemäß dem Oberbegriff des Anspruchs 1.

Aus dem Stand der Technik bekannt sind lösbare Rohrsteckverbindungen mit außenliegender Sicherungsklammer.

Die außenliegende Sicherungsklammer benötigt Bauraum und birgt die Gefahr der Verletzung durch scharfe Kanten sowie des Hängenbleibens bei der Handhabung. Darüber hinaus ist es möglich, dass beim Fügen ein möglicherweise zusätzlich vorhandenes Dichtelement negativ beeinflusst wird.

Der Erfindung liegt die Aufgabe zugrunde, eine (Rohr-)Steckverbindung der genannten Art mit verdeckter Sicherungsfunktion anzugeben, welche die genannten Nachteile überwindet und vorzugsweise manuell montierbar und demontierbar ist. Idealerweise soll die Sicherung bzw. Sicherungsfunktion optisch oder taktil kontrollierbar sein.

Die Aufgabe wird erfindungsgemäß gelöst durch eine Steckverbindung bzw. Rohrsteckverbindung mit den Merkmalen des beigefügten Anspruchs 1.

Vorteilhafte Weiterbildungen der Erfindung sind in den Unteransprüchen definiert.

Im Folgenden werden die Begriffe Steckverbindung und Rohrsteckverbindung als Synonyme verwendet.

Erfindungsgemäß ist eine Steckverbindung mit einem Innenrohr und mit einem Außenrohr, welches Außenrohr mit einem seiner Enden auf ein Ende des Innenrohrs aufgesteckt ist, dadurch gekennzeichnet, dass außen an dem Innenrohr im Bereich seines genannten Endes ein Federelement angeordnet ist; das Außenrohr an seinem genannten Ende eine erste Aufweitung aufweist, im Bereich welcher ersten Aufweitung das Außenrohr von dem Innenrohr beabstandet ist und das Federelement übergreift; und das Außenrohr im Bereich der ersten Aufweitung eine Eingriffstruktur aufweist, mit welcher Eingriffstruktur das Federelement in Eingriff steht.

Aufgrund der Tatsache, dass das Außenrohr mit seiner Aufweitung das Federelement übergreift, welches Federelement durch seinen Eingriff mit der Eingriffstruktur die angesprochene Sicherungsfunktion bereitstellt, lassen sich die Nachteile des Standes der Technik, insbesondere die Gefahr der Verletzung durch scharfe Kanten sowie des Hängenbleibens bei der Handhabung, vermeiden.

Folgende Weiterbildungen der erfindungsgemäßen Steckverbindung haben sich in der Praxis als besonders vorteilhaft erwiesen:
Eine erste Weiterbildung der erfindungsgemäßen Steckverbindung sieht vor, dass das Innenrohr im Bereich seines genannten Endes eine außenliegende Befestigungsstruktur zum Befestigen des Federelements aufweist. Auf diese Weise kann das Federelement bereits im Vorfeld mit dem Innenrohr verbunden werden, was die Handhabung erleichtert.

Eine zweite Weiterbildung der erfindungsgemäßen Steckverbindung sieht vor, dass die Befestigungsstruktur als wenigstens eine Haltesicke ausgebildet ist. Eine solche Befestigungsstruktur ist besonders einfach und kostengünstig herstellbar.

Eine andere Weiterbildung der erfindungsgemäßen Steckverbindung sieht vor, dass die wenigstens eine Haltesicke in radialer Richtung nach innen ausgebildet ist. Auf diese Weise steht die Befestigungsstruktur gar nicht oder nur wenig nach außen gegenüber dem Innenohr hervor, was insbesondere in einem noch unverbundenen Zustand Rohrsteckverbindung vorteilhaft sein kann.

Eine wieder andere Weiterbildung der erfindungsgemäßen Steckverbindung sich dagegen vor, dass die wenigstens eine Haltesicke in radialer Richtung nach au-ßen ausgebildet ist. Auf diese Weise bewirkt die Befestigungsstruktur insbesondere keine Reduzierung eines lichten Innenquerschnitts des Innenrohrs.

Noch eine andere Weiterbildung der erfindungsgemäßen Steckverbindung sieht vor, dass das Federelement elastisch in die Befestigungsstruktur eingerastet ist. Dies ermöglicht eine besonders einfache und kostengünstige Herstellung der Rohrsteckverbindung bzw. des Innenrohrs mitsamt Federelement. Das Federelement kann in diesem Zusammenhang sowohl radial als auch axial auf das Innenohr aufgebracht werden.

Eine andere Weiterbildung der erfindungsgemäßen Steckverbindung ist dadurch gekennzeichnet, dass das Federelement in einem verbundenen Zustand von Innenrohr und Außenrohr axial umgebogen ist. Auf diese Weise befindet sich das Federelement in einem gespannten Zustand, sodass es bei seinem Eingreifen in die Eingriffstruktur für eine effiziente Sicherung der Steckverbindung sorgt.

Um eine ausreichende Dichtigkeit der Steckverbindung zu erreichen, sieht eine wieder andere Weiterbildung der erfindungsgemäßen Steckverbindung vor, dass zwischen Innenrohr und Außenrohr wenigstens ein Dichtelement angeordnet ist, insbesondere ein O-Ring.

Als besonders vorteilhaft hat es sich erwiesen, wenn bei einer noch anderen Weiterbildung der erfindungsgemäßen Steckverbindung das Dichtelement in einer umlaufenden Ausformung des Außenrohrs aufgenommen ist, welche Ausformung außerhalb der ersten Aufweitung angeordnet ist, vorzugsweise im Bereich einer zweiten Aufweitung des Außenrohrs. Hierdurch ist sichergestellt, dass es beim Fügen von Innenrohr und Außenrohr zwecks Schaffung der Steckverbindung nicht zu einer Beschädigung des Dichtelements kommen kann.

Noch eine andere Weiterbildung der erfindungsgemäßen Steckverbindung ist dadurch gekennzeichnet, dass im Bereich der zweiten Aufweitung ein Innendurchmesser des Außenrohrs einem Außendurchmesser des Innenrohrs im Wesentlichen entspricht. Dies trägt in besonderem Maße zum Erreichen der weiter oben bereits erwähnten Dichtigkeit bei.

Eine alternative Ausgestaltung der erfindungsgemäßen Steckverbindung sieht dagegen vor, dass das Dichtelement in einer außen an dem Innenrohr ausgebildeten Haltestruktur, vorzugsweise in Form einer Haltesicke, angeordnet ist.

Um die Herstellung zu vereinfachen und insbesondere kostengünstig auszugestalten, ist eine hierauf aufbauende Weiterbildung der erfindungsgemäßen Steckverbindung dadurch gekennzeichnet, dass die Haltestruktur teilweise durch die weiter oben erwähnte Befestigungsstruktur, insbesondere die in radialer Richtung nach außen ausgebildet Haltesicke, gebildet ist. Besonders vorteilhaft ist in diesem Zusammenhang die Ausbildung einer doppelten Haltesicke, die einerseits das Federelement und andererseits das Dichtelement aufnimmt.

Eine äußerst bevorzugte Weiterbildung der erfindungsgemäßen Steckverbindung ist dadurch gekennzeichnet, dass die Eingriffstruktur als Durchbruch in dem Außenrohr ausgebildet ist. Auf diese Weise ist der Eingriff des Federelements in die Eingriffstruktur von außen sichtbar und kann entsprechend kontrolliert werden.

Eine alternative Weiterbildung der erfindungsgemäßen Steckverbindung zeichnet sich dadurch aus, dass die Eingriffstruktur als radiale Aufwölbung des Außenrohrs ausgebildet ist. Auf diese Weise ist die Eingriffstruktur durch Schadeinwirkung von außen, insbesondere durch Verschmutzung, geschützt.

Eine äußerst bevorzugte Weiterbildung der erfindungsgemäßen Steckverbindung ist dadurch gekennzeichnet, dass das Federelement axial über das Außenrohr hinausragt. Auch dies ermöglicht in vorteilhafter Weise zumindest eine optische Kontrolle der Sicherungsfunktion.

Eine besonders vorteilhafte Weiterbildung der erfindungsgemäßen Steckverbindung ist dadurch gekennzeichnet, dass das Federelement ausgehend von der Befestigungsstruktur zunächst einen ersten Abschnitt mit einem (im Wesentlichen) radialen Verlauf, dann einen zweiten Abschnitt, in welchem zweiten Abschnitt das Federelement mit der Eingriffstruktur in Eingriff steht, und im Anschluss einen dritten Abschnitt aufweist, mit welchem dritten Abschnitt das Federelement aus dem Außenrohr hervorragt, wie weiter oben bereits erwähnt. Dabei ist das Federelement vorzugsweise derart angeordnet, dass ein Bewegen des dritten Abschnitts in Richtung des Innenrohrs, beispielsweise durch manuellen Druck, den zweiten Abschnitt aus seinem Eingriff mit der Eingriffstruktur befreit. Das Federelement wirkt also als eine Art elastischer Sicherungshebel und ermöglicht eine einfache Demontage der Steckverbindung.

Eine andere, besonders vorteilhafte Weiterbildung der erfindungsgemäßen Steckverbindung zeichnet sich dadurch aus, dass das Außenrohr mit seinem genannten Ende auf das genannte Ende des Innenrohrs in axialer Richtung aufschiebbar ist, wobei das Federelement in axialer Richtung umbiegbar ist bzw. durch das Außenrohr umgebogen wird und bei Erreichen einer verbundenen Stellung in Verbindung mit der Eingriffstruktur eine elastisch fügbare Schnappverbindung mit Formschluss bildet. Eine solche Steckverbindung ist besonders einfach und sicher zu handhaben. Aufgrund der elastisch fügbaren Schnappverbindung mit Formschluss, welcher Formschluss durch den Eingriff des Federelements in die Eingriffstruktur hergestellt wird, ist die Steckverbindung einfach montierbar und auch wieder demontierbar - insbesondere, wenn das Federelement als elastischer Sicherungshebel ausgebildet ist, wie weiter oben beschrieben.

Um den Fügeprozess zu erleichtern, ist eine andere Weiterbildung der erfindungsgemäßen Steckverbindung dadurch gekennzeichnet, dass das Innenrohr endständig an seinem genannten Ende eine Einführschräge aufweist, insbesondere in Form einer Verjüngung zumindest seines Außendurchmessers.

Für die praktische Verwendung insbesondere im Automobilbereich hat es sich als vorteilhaft erwiesen, wenn das Innenrohr und das Außenrohr in einem metallischen Werkstoff ausgebildet sind, vorzugsweise in Stahl oder Edelstahl.

Eine gute Demontierbarkeit der Steckverbindung lässt sich auch dadurch erreichen, dass im Zuge einer anderen Weiterbildung der erfindungsgemäßen Steckverbindung das Außenrohr an seinem genannten Ende endständig axial auf sich selbst zurückgebogen ist, wobei zwischen einer betreffenden Rückbiegung des Außenrohrs und einem Abschnitt des Außenrohrs ein radialer Abstand verbleibt. Eine insbesondere manuelle Druckeinwirkung auf die genannte Rückbiegung kann dann dazu führen, dass sich das Außenrohr zumindest im Bereich der Eingriffstruktur weitet, sodass dann das Innenrohr zusammen mit dem Federelement aus dem Außenrohr herausgezogen werden kann.

Zusammenfassend wird demnach vorgeschlagen, eine Rohrsteckverbindung, vorzugsweise mit angeformten Dichtelementsitz, derart auszuführen, dass auf dem Innenrohr eine Befestigungsstruktur für ein Federelement (beispielsweise in Form einer Haltesicke) ausgeformt wird, in welcher Befestigungsstruktur ein Federelement befestigt, insbesondere elastisch eingerastet, wird. Das Federelement ist vorzugsweise so aufgebaut, dass es von der Befestigungsstruktur bzw. einem Rastsitz aus in axialer Richtung umgebogen ist und in Verbindung mit dem Überwurfrohr (Außenrohr) eine vorzugsweise elastisch fügbare Schnappverbindung mit Formschluss bildet, wobei die genannte Schnappverbindung eine spezielle Ausführungsform des genannten Eingriffs in die Eingriffstruktur darstellt.

Vorgeschlagen wird damit unter anderem eine (Rohr-)Steckverbindung mit einem Innenrohr und mit einem Außenrohr, welches Außenrohr in einem verbundenen Zustand mit einem seiner Enden auf ein Ende des Innenrohrs aufgesteckt oder zur Schaffung des verbundenen Zustands aufsteckbar ist, wobei im Bereich des genannten Endes ein lichter Innendurchmesser des Außenrohrs vorzugsweise im Wesentlichen einem Außendurchmesser des Innenrohrs entspricht, welche Steckverbindung dadurch gekennzeichnet ist, dass das Innenrohr im Bereich seines genannten Endes eine außenliegende Befestigungsstruktur zum Befestigen eines Federelements aufweist; in der Befestigungsstruktur ein Federmittel angeordnet ist, welches Federmittel in einem unverbundenen Zustand von Innenrohr und Außenrohr in radialer Richtung um ein erstes Maß von dem Innenrohr abragt; das Außenrohr an seinem genannten Ende eine Aufweitung aufweist, im Bereich welcher Aufweitung das Außenrohr in dem verbundenen Zustand um ein zweites Maß von dem Innenrohr beabstandet ist; das erste Maß größer als das zweite Maß ist, sodass das Federelement beim Aufstecken des Außenrohrs mit seinem genannten Ende auf das genannte Ende des Innenrohrs in Richtung auf das Innenrohr gespannt wird; und das Außenrohr im Bereich der Aufweitung eine Eingriffstruktur aufweist, in die das Federelement in dem verbundenen Zustand bei gleichzeitiger Entspannung eingreift.

Die entsprechenden, weiter oben beschriebenen Ausgestaltungen der Erfindung sorgen insbesondere dafür, dass es keine Gefahr einer Beschädigung des Dichtelements während des Fügeprozesses gibt.

Durch die verdeckte Ausgestaltung der Sicherungsfunktion gibt es im Rahmen der Erfindung nur eine geringe Verhakenswahrscheinlichkeit.

Vorteilhafterweise erfolgt beim Fügen eine Zentrierung der (Steck-)Verbindung vor einem Kontakt des Dichtelements, insbesondere des O-Rings, mit dem Außenrohr.

Weitere Eigenschaften und Vorteile der Erfindung ergeben sich aus der nachfolgenden Beschreibung von Ausführungsbeispielen anhand der Zeichnung.
- Figur 1: zeigt im Längsschnitt eine erste Ausgestaltung der erfindungsgemäßen Steckverbindung;
- Figur 2: zeigt im Längsschnitt eine zweite Ausgestaltung der erfindungsgemäßen Steckverbindung;
- Figur 3: zeigt im Längsschnitt eine dritte Ausgestaltung der erfindungsgemäßen Steckverbindung;
- Figur 4: zeigt im Längsschnitt eine vierte Ausgestaltung der erfindungsgemäßen Steckverbindung; und
- Figur 5: zeigt im Längsschnitt eine fünfte Ausgestaltung der erfindungsgemäßen Steckverbindung.

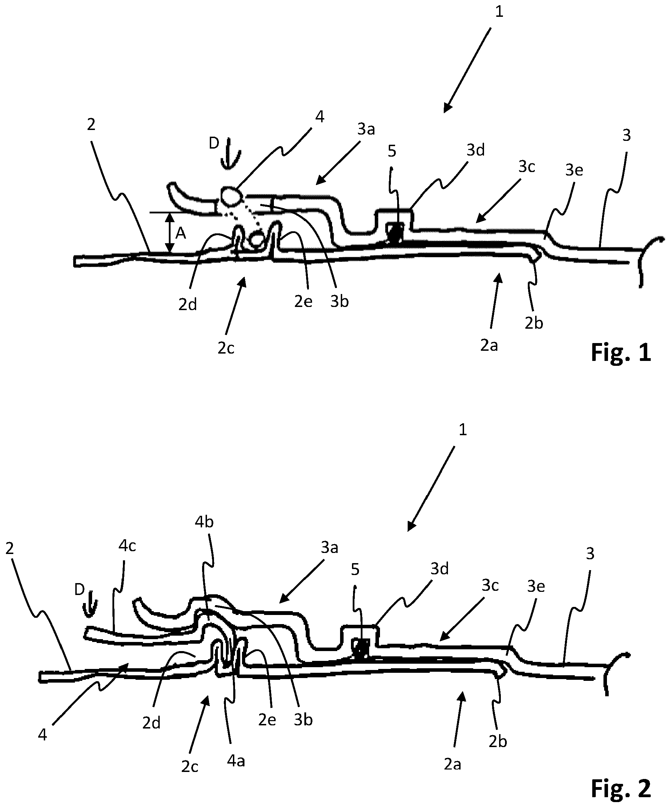

In Figur 1 ist im Längsschnitt eine erste Ausgestaltung der erfindungsgemäßen Steckverbindung gezeigt, wobei hier - wie auch in allen anderen Figuren - aufgrund einer Symmetrie bezüglich einer Längsachse der Steckverbindung immer nur eine Hälfte der erfindungsgemäßen Steckverbindung dargestellt ist.

Die Steckverbindung ist insgesamt mit dem Bezugszeichen 1 bezeichnet. Sie umfasst bei Bezugszeichen 2 ein Innenrohr und bei Bezugszeichen 3 ein Außenrohr. Das Innenrohr 2 weist an seinem in das Außenrohr 3 eingeführten Ende 2a eine Verjüngung 2b auf, die als Einführschräge fungiert. Weiterhin besitzt das Innenrohr 2 eine Befestigungsstruktur 2c für ein Federelement 4, welche Befestigungsstruktur 2c in Form einer radial nach außen ausgebildeten Haltesicke ausgebildet ist. Die Haltesicke umfasst zwei axiale voneinander beabstandete Aufwölbungen 2d, 2e des Innenrohrs 2, zwischen welchen Aufwölbungen 2d, 2e das Federelement 4 befestigt ist. Das Federelement 4 ragt in radialer Richtung gegenüber dem Innenrohr 2 vor.

Das Außenrohr 3 besitzt eine erste, endständige Aufweitung 3a, mit der es das Innenrohr 2 im Bereich der Befestigungsstruktur 2c und entsprechend auch das Federelement 4 übergreift, wobei das Außenrohr 3 im Bereich der Aufweitung 3a um ein Maß A von dem Innenrohr 2 beabstandet ist. Das genannte Maß A ist größer als eine radiale Abmessung der Aufwölbungen 2d, 2e, aber kleiner als ein Maß, mit welchem das Federelement 4 gegenüber dem Innenrohr 2 hervorragt.

Im Bereich der ersten Aufweitung 3a besitzt das Außenrohr 3 außerdem eine Eingriffstruktur 3b für das Federelement 4, welche Eingriffstruktur 3b gemäß der Ausgestaltung in Figur 1 als Durchbruch in dem Außenrohr 3 ausgebildet ist. Eine solche Ausgestaltung ermöglicht eine optische Kontrolle der Sicherungsfunktion.

Das Außenrohr 3 besitzt noch eine zweite Aufweitung 3c, die der ersten Aufweitung 3a benachbart angeordnet ist. Im Bereich der zweiten Aufweitung 3c ist das Außenrohr 3 derart ausgestaltet bzw. aufgeweitet, dass sein lichter Innendurchmesser im Wesentlichen, d.h. bis auf übliche Toleranzen, einem Außendurchmesser des Innenrohrs 2 entspricht. Im Bereich der zweiten Aufweitung 3c besitzt das Außenrohr weiterhin eine umlaufende Ausformung 3d, in der ein Dichtelement 5 in Form eines O-Rings angeordnet ist.

Das Innenrohr 2 liegt im Bereich seiner Verjüngung 2b an einem Absatz 3e des Außenrohr 3 an, welcher Absatz 3e die zweite Aufweitung 3c begrenzt.

Zwecks Schaffung der in Figur 1 gezeigten Steckverbindung 1 wird das Außenrohr 3 mit seiner ersten Aufweitung 3a von rechts auf das Innenrohr 2 aufgeschoben bzw. aufgesteckt, wobei das Federelement 4 axial nach links umgebogen und entsprechend gespannt wird. Sobald das Außenrohr 3 mit der Eingriffsstruktur 3b bzw. dem entsprechenden Durchbruch bei dem Federelement 4 ankommt, federt dieses in seine in Figur 1 gezeigte (Ruhe-) Stellung zurück und befindet sich so in Eingriff mit der Eingriffstruktur 3b. Die Steckverbindung 1 ist somit gesichert.

Durch eine Druckeinwirkung auf das Federelement 4 gemäß dem Pfeil D in Figur 1 kann das Federelement 4 aus einem Eingriff mit der Eingriffstruktur 3b befreit werden, um die Steckverbindung 1 wieder zu lösen.

In den nachfolgenden Figuren 2 bis 5 sind weitere Ausgestaltungen der erfindungsgemäßen Steckverbindung 1 zeichnerisch dargestellt. Gleiche Bezugszeichen bezeichnen in allen Figuren gleiche oder zumindest gleich wirkende Elemente. Bei der nachfolgenden Beschreibung der weiteren Ausführungsbeispiele wird im Wesentlichen auf die Unterschiede zur Ausgestaltung gemäß Figur 1 näher eingegangen. Möglicherweise sind in den Figuren 2 bis 5 nicht alle Elemente erneut bezeichnet.

Die Ausgestaltung gemäß Figur 2 unterscheidet sich von der Ausgestaltung gemäß Figur 1 nur durch die Art des Federelements 4 und der Eingriffstruktur 3b.

Gemäß Figur 2 ist das Federelement 4 derart ausgebildet, dass es - in dem gezeigten Längsschnitt - ausgehend von der Befestigungsstruktur 2c zunächst einen ersten Abschnitt 4a mit einem im Wesentlichen radialen Verlauf aufweist, mit welchem ersten Abschnitt 4a es in der Befestigungsstruktur 2c festgelegt ist. Daran schließt sich ein zweiter Abschnitt 4b an, in welchem zweiten Abschnitt 4b das Federelement 4 radial aufgewölbt ist und mit der Eingriffstruktur 3b des Außenrohr 3 in Eingriff steht. Die genannte Eingriffstruktur 3b ist hier als passende radiale Aufwölbung des Außenrohrs 3 ausgebildet. Im Anschluss weist das Federelement 4 einen dritten Abschnitt 4c auf, mit welchem dritten Abschnitt 4c es aus dem Außenrohr 3 hervorragt. Auf diese Weise ist das Federelement 4 derart ausgebildet bzw. angeordnet, dass ein Bewegen des dritten Abschnitts 4c des Federelements 4 in Richtung des Innenrohrs 2, beispielsweise durch manuelle Druckeinwirkung gemäß dem Pfeil D, den zweiten Abschnitt 4b des Federelements 4 aus seinem Eingriff mit der Eingriffstruktur 3b befreit. Die Steckverbindung 1 kann somit leicht wieder gelöst werden.

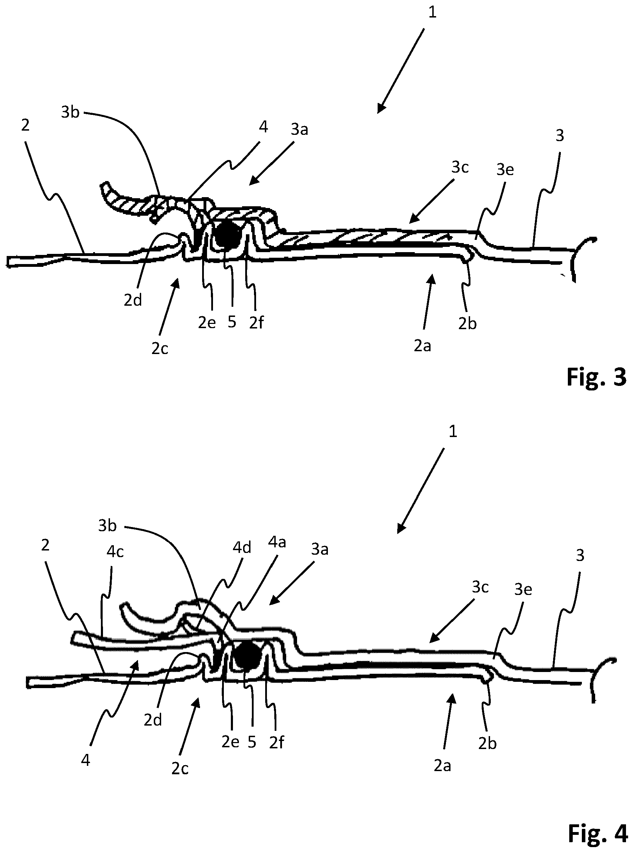

Die Ausgestaltung der Steckverbindung 1 gemäß Figur 3 entspricht hinsichtlich des Federelements 4 und der Eingriffstruktur 3b im Wesentlichen der Ausgestaltung gemäß Figur 1. Ein wesentlicher Unterschied zur Ausgestaltung gemäß Figur 1 besteht darin, dass vorliegend das Dichtelement 5 in einer außen an dem Innenrohr 2 ausgebildeten Haltestruktur, welche die Form einer (weiteren) Haltesicke annimmt, angeordnet ist. Die genannte Haltestruktur besteht teilweise aus der bereits erwähnten Befestigungsstruktur 2c für das Federelement 4, welche Befestigungsstruktur 2c lediglich noch eine weitere, dritte Aufwölbung 2f umfasst, welche so angeordnet ist, dass das Dichtelement 5 zwischen der Aufwölbung 2e und der Aufwölbung 2f anzuordnen ist.

Figur 4 zeigt eine andere Ausgestaltung der Steckverbindung 1, welche Ausgestaltung im Wesentlichen einer Kombination der Ausgestaltungen gemäß Figur 2 und Figur 3 entspricht:
Während in Figur 4 das Federelement 4 und die Eingriffstruktur 3b etwa so ausgebildet sind, wie weiter oben anhand von Figur 2 beschrieben wurde, ist das Innenrohr 2 etwa so ausgebildet, wie weiter oben anhand von Figur 3 beschrieben. Dies betrifft insbesondere die Anordnung des Dichtelements 5.

Wie man der Figur 4 noch entnimmt, kann das Federelement 4 in dem zweiten Abschnitt 4b abweichend mit einer Ausklinkung 4d ausgebildet sein, welche Ausklinkung 4d formschlüssig in die Eingriffstruktur 3b eingreift, wie dargestellt.

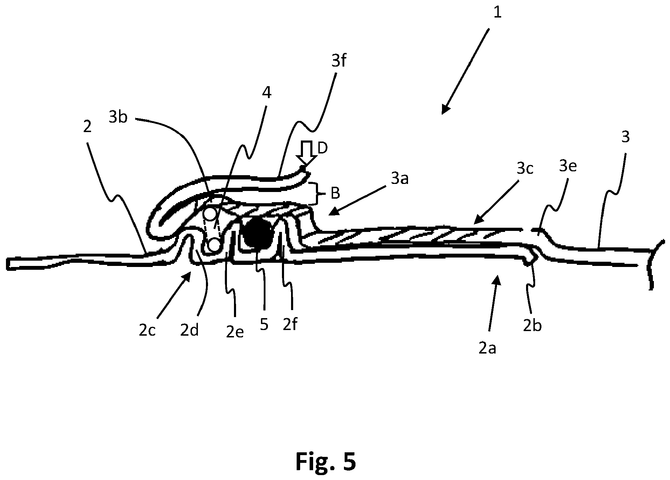

Schließlich zeigt die Figur 5 noch eine Ausgestaltung, die hinsichtlich der Ausgestaltung des Innenrohrs 2 im Wesentlichen der Ausgestaltung gemäß den Figuren 3 und 4 entspricht, was insbesondere die Anordnung des Dichtelements 5 betrifft. Hinsichtlich des Federelements 4 entspricht die Ausgestaltung etwa der Ausgestaltung in Figur 1.

Eine Abweichung ergibt sich insbesondere im Bereich des Außenrohrs 3. Dieses ist bei Bezugszeichen 3f axial auf sich selbst zurückgebogen, wobei zwischen einer betreffenden Rückbiegung 3f des Außenrohrs 3 und einem radial weiter innen liegenden Abschnitt des Außenrohrs 3 ein radialer Abstand B verbleibt. Die Aufwölbung bei Bezugszeichen 3b dient als eine Art Lager, sodass bei insbesondere manuelle Druckeinwirkung gemäß dem Pfeil D auf die Rückbildung 3f sich das Außenrohr 3 an seinem Ende öffnet bzw. weitet, sodass die Steckverbindung 1 gelöst werden kann.

Wenn, wie in Figur 5 gezeigt, das Außenrohr 3 hinter die endständige Aufwölbung 2d des Innenrohrs 2 eingreift, kann grundsätzlich auf das separate Federelement 4 verzichtet werden, weil dann quasi das Außenrohr 3 mit seinem gezeigten Ende selbst als Federelement fungiert.

## Patentansprüche

1. Steckverbindung (1) mit einem Innenrohr (2) und mit einem Außenrohr (3), welches Außenrohr (3) mit einem seiner Enden auf ein Ende des Innenrohrs (2) aufgesteckt ist,
**dadurch gekennzeichnet, dass**
außen an dem Innenrohr (2) im Bereich seines genannten Endes ein Federelement (4) angeordnet ist;
das Außenrohr (3) an seinem genannten Ende eine erste Aufweitung (3a) aufweist, im Bereich welcher ersten Aufweitung (3a) das Außenrohr (3) von dem Innenrohr (2) beabstandet ist (A) und das Federelement (4) übergreift;
das Außenrohr (3) im Bereich der ersten Aufweitung (3a) eine Eingriffstruktur (3b) aufweist, mit welcher Eingriffstruktur (3b) das Federelement (4) in Eingriff steht.

2. Steckverbindung (1) nach Anspruch 1,
**dadurch gekennzeichnet, dass** das Innenrohr (2) im Bereich seines genannten Endes eine außenliegende Befestigungsstruktur (2c) zum Befestigen des Federelements (4) aufweist.

3. Steckverbindung (1) nach Anspruch 1 oder 2,
**dadurch gekennzeichnet, dass** die Befestigungsstruktur (2c) als wenigstens eine Haltesicke ausgebildet ist, wobei bevorzugt die wenigstens eine Haltesicke in radialer Richtung nach innen oder in radialer Richtung nach außen ausgebildet ist.

4. Steckverbindung (1) nach einem der Ansprüche 1 bis 3,
**dadurch gekennzeichnet, dass** das Federelement (4) elastisch in die Befestigungsstruktur (2c) eingerastet ist.

5. Steckverbindung (1) nach einem der Ansprüche 1 bis 4,
**dadurch gekennzeichnet, dass** das Federelement (4) in einem verbundenen Zustand von Innenrohr (2) und Außenrohr (3) axial umgebogen ist.

6. Steckverbindung (1) nach einem der Ansprüche 1 bis 5,
**dadurch gekennzeichnet, dass** zwischen Innenrohr (2) und Außenrohr (3) wenigstens ein Dichtelement (5) angeordnet ist, insbesondere ein O-Ring.

7. Steckverbindung (1) nach Anspruch 6,
**dadurch gekennzeichnet, dass** das Dichtelement (5) in einer umlaufenden Ausformung (3d) des Außenrohrs (3) aufgenommen ist, welche Ausformung (3d) außerhalb der ersten Aufweitung (3a) angeordnet ist, vorzugsweise im Bereich einer zweiten Aufweitung (3c).

8. Steckverbindung (1) nach Anspruch 6,
**dadurch gekennzeichnet, dass** das Dichtelement (5) in einer außen an dem Innenrohr (2) ausgebildeten Haltestruktur, vorzugsweise in Form einer Haltesicke, angeordnet ist.

9. Steckverbindung (1) nach Anspruch 6 bei Rückbezug auf Anspruch 3, **dadurch gekennzeichnet, dass** die Haltestruktur teilweise durch die Befestigungsstruktur (2c) gemäß Anspruch 3 gebildet ist.

10. Steckverbindung (1) nach einem der Ansprüche 1 bis 9,
**dadurch gekennzeichnet, dass** die Eingriffstruktur (3b) als Durchbruch in dem Außenrohr (3) oder als radiale Aufwölbung des Außenrohrs (3) ausgebildet ist.

11. Steckverbindung (1) nach einem der Ansprüche 1 bis 10,
**dadurch gekennzeichnet, dass** das Federelement (4) axial über das Außenrohr (3) hinausragt.

12. Steckverbindung (1) nach Anspruch 2 und Anspruch 11,
**dadurch gekennzeichnet, dass** das Federelement (4) ausgehend von der Befestigungsstruktur (2c) zunächst einen ersten Abschnitt (4a) mit einem radialen Verlauf, dann einen zweiten Abschnitt (4b), in welchem zweiten Abschnitt (4b) das Federelement (4) mit der Eingriffstruktur (3b) in Eingriff steht, und im Anschluss einen dritten Abschnitt (4c) aufweist, mit welchem dritten Abschnitt (4c) das Federelement (4) aus dem Außenrohr (3) hervorragt, wobei das Federelement (4) derart angeordnet ist, dass ein Bewegen des dritten Abschnitts (4c) in Richtung des Innenrohrs (2) den zweiten Abschnitt (4b) aus seinem Eingriff mit der Eingriffstruktur (3b) befreit.

13. Steckverbindung (1) nach einem der Ansprüche 1 bis 12,
**dadurch gekennzeichnet, dass** das Außenrohr (3) mit seinem genannten Ende auf das genannte Ende des Innenrohrs (2) in axialer Richtung aufschiebbar ist, wobei das Federelement (4) in axialer Richtung umbiegbar ist und bei Erreichen einer verbundenen Stellung von Außenrohr (3) und Innenrohr (2) in Verbindung mit der Eingriffstruktur (3b) eine elastisch fügbare Schnappverbindung mit Formschluss bildet.

14. Steckverbindung (1) nach einem der Ansprüche 1 bis 13,
**dadurch gekennzeichnet, dass** das Innenrohr (2) und das Außenrohr (3) in einem metallischen Werkstoff ausgebildet sind, vorzugsweise in Stahl oder Edelstahl.

15. Steckverbindung (1) nach einem der Ansprüche 1 bis 14,
**dadurch gekennzeichnet, dass** das Außenrohr (3) an seinem genannten Ende endständig axial auf sich selbst zurückgebogen ist, wobei zwischen einer betreffenden Rückbiegung (3f) des Außenrohrs (3) und einem Abschnitt des Außenrohrs (3) ein radialer Abstand verbleibt (B).
